# EUROPÄISCHE PATENTSCHRIFT

(11) **EP 2 780 737 B1**
(45) Veröffentlichungstag und Bekanntmachung des Hinweises auf die Patenterteilung: **30.12.2015**
(21) Anmeldenummer: 12795367.7
(22) Anmeldetag: 09.11.2012
(51) Int. Cl.: G01S 15/93, G01S 15/87

(54) **FAHRERASSISTENZEINRICHTUNG FÜR EIN KRAFTFAHRZEUG, KRAFTFAHRZEUG UND VERFAHREN ZUM BETREIBEN EINER FAHRERASSISTENZEINRICHTUNG IN EINEM KRAFTFAHRZEUG**
DRIVER ASSISTANCE DEVICE FOR A MOTOR VEHICLE, MOTOR VEHICLE AND METHOD FOR OPERATING A DRIVER ASSISTANCE DEVICE IN A MOTOR VEHICLE
DISPOSITIF D'AIDE À LA CONDUITE POUR UN VÉHICULE AUTOMOBILE, VÉHICULE AUTOMOBILE ET PROCÉDÉ DE FONCTIONNEMENT D'UN DISPOSITIF D'AIDE À LA CONDUITE DANS UN VÉHICULE AUTOMOBILE

(30) Priorität: 15.11.2011 DE 102011118643
(43) Veröffentlichungstag der Anmeldung: 24.09.2014
(73) Patentinhaber: Valeo Schalter und Sensoren GmbH, 74321 Bietigheim-Bissingen (DE)
(72) Erfinder: HALLEK, Michael, 71717 Beilstein (DE)
(86) Internationale Anmeldenummer: PCT/EP2012/072273
(87) Internationale Veröffentlichungsnummer: WO 2013/072255

(56) Entgegenhaltungen:
- DE-A1- 3 806 847
- DE-A1- 19 744 185
- DE-A1-102010 027 780

## Beschreibung

Die Erfindung betrifft eine Fahrerassistenzeinrichtung für ein Kraftfahrzeug, welche einen ersten Ultraschallsensor mit einer Membran zum Aussenden und Empfangen von Ultraschallwellen sowie einen zweiten Ultraschallsensor mit einer Membran zum Aussenden und Empfangen von Ultraschallwellen aufweist. Der erste Ultraschallsensor besitzt eine erste Resonanzfrequenz, während der zweite Ultraschallsensor eine von der ersten Resonanzfrequenz verschiedene zweite Resonanzfrequenz aufweist. Eine Steuereinrichtung steuert die beiden Ultraschallsensoren an. Die Erfindung betrifft außerdem ein Kraftfahrzeug mit einer derartigen Fahrerassistenzeinrichtung, wie auch ein Verfahren zum Betreiben einer solchen Fahrerassistenzeinrichtung in einem Kraftfahrzeug.

Fahrerassistenzeinrichtungen mit Ultraschallsensoren sind bereits Stand der Technik. Eine solche Fahrerassistenzeinrichtung kann zum Beispiel die so genannte Parkhilfe sein, mittels welcher der Fahrer beim Rangieren des Kraftfahrzeugs unterstützt wird. Die Fahrerassistenzeinrichtung weist in der Regel eine Vielzahl von Ultraschallsensoren auf, die sowohl am vorderen Stoßfänger als auch am hinteren Stoßfänger des Kraftfahrzeugs angeordnet sind. Die Ultraschallsensoren arbeiten nach dem Echolotverfahren beziehungsweise dem Echolaufzeitprinzip. Dies bedeutet, dass von einem Ultraschallsensor Ultraschallwellen ausgesendet werden können, die dann an einem in der Umgebung des Kraftfahrzeugs befindlichen Hindernis reflektieren und als reflektiertes Echo wieder zum Ultraschallsensor gelangen. Dieses reflektierte Echo wird von dem Ultraschallsensor empfangen, und es wird die Laufzeit der Ultraschallwellen gemessen. Aus der gemessenen Laufzeit wird dann die Entfernung zwischen dem Hindernis und dem Ultraschallsensor berechnet.

Es sind außerdem so genannte Kreuzmessungen bekannt: Hier sendet ein erster Ultraschallsensor die Ultraschallwelle aus, und das vom Hindernis reflektierte Echo wird von einem zweiten Ultraschallsensor empfangen. Auf diesem Wege kann zum Beispiel die relative Position des Hindernisses bezüglich des Kraftfahrzeugs ermittelt werden. Dazu muss aber der zweite Ultraschallsensor auch in der Lage sein, die Ultraschallwelle des ersten Ultraschallsensors zu empfangen. Auf der anderen Seite besitzen die Ultraschallsensoren in der Regel ein sehr schmalbandiges Frequenzspektrum, nämlich aus dem Grund, weil ein derartiges schmales Frequenzspektrum für eine große Robustheit gegenüber Fremdschall beziehungsweise Störschall - etwa aufgrund von Druckluftbremsen oder aber gegenüber Reifenabrollgeräuschen - sorgt und außerdem eine hohe Reichweite des Ultraschallsensors ermöglicht. Dabei sendet der Ultraschallsensor üblicherweise Ultraschallwellen mit der eigenen Resonanzfrequenz der Membran aus und lässt auch beim Empfangen nur eine bestimmte Bandbreite zu, nämlich in der Regel nur wenige Kilohertz um die Resonanzfrequenz.

Um die Kreuzmessung zu ermöglichen, sollten bei der Fahrerassistenzeinrichtung Ultraschallsensoren mit gleichen Resonanzfrequenzen eingesetzt werden. Dann ist nämlich sichergestellt, dass die von einem Ultraschallsensor ausgesendeten Ultraschallwellen auch von dem zweiten Ultraschallsensor empfangen werden können. Dies schränkt jedoch die "Flexibilität" der Fahrerassistenzeinrichtung nicht unwesentlich ein: Es müssen einerseits Ultraschallsensoren gleicher Bauweise beziehungsweise solche Ultraschallsensoren verwendet werden, die in unverbautem Zustand gleiche Resonanzfrequenzen aufweisen. Auf der anderen Seite dürfen die Ultraschallsensoren nicht auf unterschiedliche Art und Weise im Stoßfänger verbaut werden. Beispielsweise darf der Verbau der Ultraschallsensoren nicht derart unterschiedlich sein, dass einer der Ultraschallsensoren in ein im Stoßfänger ausgebildetes Loch eingesetzt wird, während der andere Sensor an einer Rückseite beziehungsweise einer Rückwand des Stoßfängers unsichtbar - ohne ein Loch im Stoßfänger - angeordnet wird. Dies würde nämlich dazu führen, dass sich die Resonanzfrequenz des letztgenannten Ultraschallsensors aufgrund einer zusätzlichen Schwingmasse des Stoßfängers verändert und somit die Resonanzfrequenzen der beiden Ultraschallsensoren unterschiedlich sind.

Setzt man hingegen Ultraschallsensoren mit unterschiedlichen Resonanzfrequenzen ein, so ergibt sich die umgekehrte Problematik: Es kann keine Kreuzmessung durchgeführt werden, weil der eine Ultraschallsensor die Ultraschallwellen des anderen Sensors nicht empfangen kann. Jedoch selbst wenn diese Ultraschallwellen des ersten Sensors in den Empfangs-Frequenzbereich des zweiten Sensors fallen, ergibt sich ein weiterer Nachteil, nämlich dass die Möglichkeit der Kodierung der Ultraschallwellen eingeschränkt ist. Für die Demodulation des empfangenen Signals muss nämlich die Trägerfrequenz - also die Sendefrequenz - möglichst mit der Resonanzfrequenz übereinstimmen.

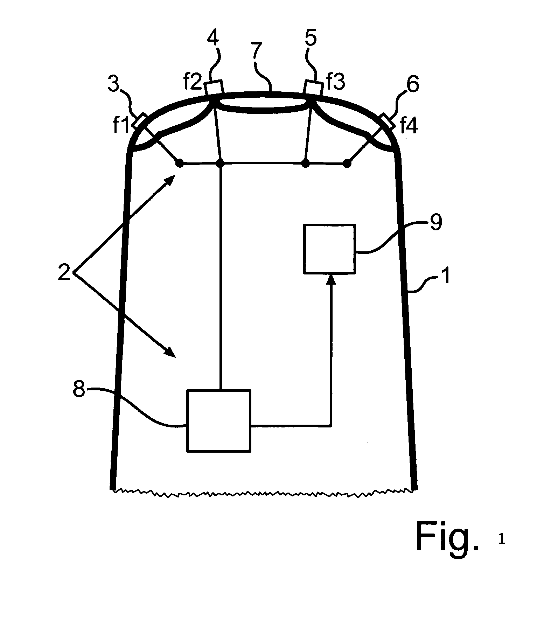

Aus dem Dokument DE 38 06 847 A1 ist eine Fahrerassistenzeinrichtung mit mehreren Ultraschallsensoren bekannt. In der in diesem Dokument beschriebenen ersten Ausführungsform gemäß den dortigen Figuren 1 und 2 werden eine Vielzahl von unterschiedlichen Sensoren eingesetzt, die sowohl zum Aussenden als auch zum Empfangen der eigenen Ultraschallwellen dienen. Die Ultraschallsensoren besitzen jeweils unterschiedliche Resonanzfrequenzen und senden auch Ultraschallwellen mit jeweils unterschiedlichen Sendefrequenzen aus. Somit sind die Ultraschallsensoren vollständig voneinander entkoppelt, so dass einer der Ultraschallsensoren die Ultraschallwellen des anderen Sensors nicht empfangen kann. Eine Kreuzmessung ist hier somit nicht möglich.

Weiterhin beschreibt die Druckschrift DE 10 2009 028 992 A1 eine Vorrichtung zur Bestimmung der Position eines Hindernisses relativ zu einem Kraftfahrzeug. Es wird ein Ultraschallpuls mit einer vorgegebenen Sendefrequenz ausgesendet. Dieser Ultraschallpuls reflektiert dann an einem Hindernis und wird wieder als Echopuls empfangen. Die Frequenz des empfangenen Echopulses wird bestimmt, und in Abhängigkeit davon wird ein Absolutwert eines Einfallswinkels des Echopulses ermittelt. Dann werden zwei Hypothesen für eine Winkelposition des Hindernisses aufgestellt. Eine der Hypothesen wird als wahr identifiziert, und zwar anhand eines Einfallswinkels eines weiteren an dem Hindernis reflektierten Echopulses.

Eine Fahrerassistenzeinrichtung mit mehreren Ultraschallsensoren ist ebenfalls aus der Druckschrift EP 1 619 518 B1 bekannt. Mittels einer zentralen Steuereinrichtung wird hier einerseits die jeweilige Sendefrequenz der einzelnen Ultraschallsensoren eingestellt; andererseits wird durch die Steuereinrichtung auch eine Mittelfrequenz eines Empfangsfilters eingestellt. Die Mittelfrequenz des Empfangsfilters eines jeden Sensors ist somit abhängig von der Sendefrequenz dieses Sensors.

DE 197 44 185 A1 offenbart eine Einrichtung zur Abstandsmessung mittels Ultraschall mit Hilfe mehrerer, vorzugsweise an einem Kraftfahrzeug angeordneter Ultraschallwandler, wobei die Laufzeit der Ultraschallimpulse von den Ultraschallwandlern zum Objekt und zurück gemessen wird. Bei der Einrichtung wird von mehreren Ultraschallwandlern gleichzeitig ein Ultraschallimpuls derart ausgesendet, dass sich die Ultraschallimpulse überlagern. Danach empfängt mindestens ein Ultraschallwandler Reflexionen des überlagerten Ultraschallimpulses. In einer Ausführungsform können die Ultraschallwandler mit einem Steuergerät derart verbunden sein, dass sie einzeln angesteuert und abgefragt werden können, und dass im Steuergerät ein Programm vorgesehen ist, das neben der einzelnen Ansteuerung der Ultraschallwandler eine gruppenweise gleichzeitige Ansteuerung vornimmt.

Es ist Aufgabe der Erfindung, eine Lösung aufzuzeigen, wie bei einer Fahrerassistenzeinrichtung der eingangs genannten Gattung eine Kreuzmessung zwischen den beiden Ultraschallsensoren ermöglicht werden kann, ohne dass die ordnungsgemäße Funktionsweise eines einzelnen Ultraschallsensors bei einer herkömmlichen Messung negativ beeinflusst wird.

Diese Aufgabe wird erfindungsgemäß durch eine Fahrerassistenzeinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Eine erfindungsgemäße Fahrerassistenzeinrichtung für ein Kraftfahrzeug weist einen ersten Ultraschallsensor mit einer Membran zum Aussenden und Empfangen von Ultraschallwellen sowie einen zweiten Ultraschallsensor mit einer Membran zum Aussenden und Empfangen von Ultraschallwellen auf. Der erste Ultraschallsensor besitzt eine erste Resonanzfrequenz, welche von einer Resonanzfrequenz (zweite Resonanzfrequenz) des zweiten Ultraschallsensors unterschiedlich ist. Eine Steuereinrichtung ist zum Ansteuern der Ultraschallsensoren bereitgestellt. Die Steuereinrichtung kann zumindest den ersten Ultraschallsensor zwischen einem ersten Betriebsmodus und einem zweiten Betriebsmodus hin- und herschalten. Während im ersten Betriebsmodus der erste Ultraschallsensor die Ultraschallwellen mit der ersten Resonanzfrequenz (also mit der Resonanzfrequenz des ersten Ultraschallsensors) aussendet, werden im zweiten Betriebsmodus die Ultraschallwellen durch den ersten Ultraschallsensor mit der zweiten Resonanzfrequenz - also in der Resonanzfrequenz des zweiten Sensors - ausgesendet.

Der erste Ultraschallsensor kann also in einem ersten Betriebsmodus betrieben werden, in welchem er die Ultraschallwellen in seiner eigenen Resonanzfrequenz aussenden und somit die reflektierten Ultraschallwellen auch selbst empfangen kann. Der erste Ultraschallsensor kann aber auch in einem zweiten Betriebsmodus betrieben werden, in welchem eine Kreuzmessung zwischen den Sensoren ermöglicht wird. Hier sendet der erste Ultraschallsensor nämlich die Ultraschallwellen mit der Resonanzfrequenz des zweiten Ultraschallsensors aus, so dass diese Ultraschallwellen durch den zweiten Ultraschallsensor empfangen werden können. Die Erfindung beruht somit auf der Tatsache, dass eine adaptive Änderung der Resonanzfrequenz der Ultraschallsensoren aus physikalischen Gründen nicht möglich ist. Stattdessen kann die Sendefrequenz des ersten Ultraschallsensors adaptiv angepasst beziehungsweise im Betrieb verändert werden, so dass diese Sendefrequenz auch außerhalb der ersten Resonanzfrequenz liegen kann. Auf diesem Wege werden die Kreuzmessungen zwischen den beiden Ultraschallsensoren ermöglicht, obwohl die Ultraschallsensoren unterschiedliche Resonanzfrequenzen besitzen. Ohne auf eine Kreuzmessung verzichten zu müssen, können somit zwei Ultraschallsensoren mit unterschiedlichen Resonanzfrequenzen verwendet werden. So können beispielsweise zwei Ultraschallsensoren unterschiedlicher Bauweise, also zwei Sensoren mit von Haus aus unterschiedlichen Resonanzfrequenzen eingesetzt werden; oder aber es können zwei gleiche Ultraschallsensoren verwendet werden, die dann auf unterschiedliche Art und Weise in ein Fahrzeugbauteil, etwa einen Stoßfänger, verbaut werden. Zum Beispiel kann ein Ultraschallsensor in einer Öffnung im Stoßfänger montiert werden, und ein gleicher Ultraschallsensor kann ohne eine Öffnung im Stoßfänger an der Rückwand des Stoßfängers angebracht werden, so dass sich insgesamt unterschiedliche Resonanzfrequenzen ergeben. Dadurch, dass die Sendefrequenz der jeweiligen Resonanzfrequenz entspricht - nämlich im ersten Betriebsmodus der ersten Resonanzfrequenz und im zweiten Betriebsmodus der zweiten Resonanzfrequenz -, wird auch die Robustheit gegenüber Fremdschall erhöht. Die Ultraschallwellen können nämlich beliebig kodiert beziehungsweise moduliert werden, und die Dekodierung kann ohne viel Aufwand bei der Resonanzfrequenz vorgenommen werden. Neben einer Kreuzmessung ist außerdem ein Parallelbetrieb möglich, in welchem jeder Ultraschallsensor in seiner eigenen Resonanzfrequenz sendet, so dass die beiden Ultraschallsensoren ausschließlich eigene Ultraschallwellen empfangen können. Die Messung mit dem einen Sensor wird somit durch die Messung mit dem anderen Sensor nicht beeinflusst.

In dem ersten Betriebsmodus sendet der erste Ultraschallsensor Ultraschallwellen mit der ersten Resonanzfrequenz aus, also mit der Resonanzfrequenz des ersten Sensors. In diesem ersten Betriebsmodus ist insbesondere vorgesehen, dass die ausgesendeten Ultraschallwellen auch durch den ersten Ultraschallsensor zur Messung des Abstands empfangen werden. Bevorzugt werden diese Ultraschallwellen mit der ersten Resonanzfrequenz ausschließlich durch den ersten Ultraschallsensor, und nicht durch den zweiten Ultraschallsensor, empfangen. Die Resonanzfrequenzen können nämlich derart auseinander liegen, dass ein Parallelbetrieb der beiden Ultraschallsensoren möglich ist. Die erste Resonanzfrequenz liegt also bevorzugt außerhalb eines Empfangsfrequenzbereiches des zweiten Ultraschallsensors.

Und umgekehrt kann in dem zweiten Betriebsmodus der zweite Ultraschallsensor die Ultraschallwellen mit der zweiten Resonanzfrequenz empfangen. Es ist insbesondere ausschließlich der zweite Ultraschallsensor, welcher die Ultraschallwellen mit der zweiten Resonanzfrequenz empfangen kann. Dies bedeutet, dass der erste Ultraschallsensor, welcher die Ultraschallwellen mit der zweiten Resonanzfrequenz ausgesendet hat, selbige Ultraschallwellen nicht mehr empfangen kann, nämlich weil die zweite Resonanzfrequenz vorzugsweise außerhalb des Empfangsfrequenzbereiches des ersten Ultraschallsensors liegt.

Wie bereits ausgeführt, können die Ultraschallsensoren Sensoren unterschiedlicher Bauart sein, so dass sie von Haus aus unterschiedliche Resonanzfrequenzen aufweisen. Somit ist die Fahrerassistenzeinrichtung nicht auf eine konkrete, besondere Bauweise der Ultraschallsensoren beschränkt. Alternativ kann jedoch auch vorgesehen sein, dass der erste und der zweite Ultraschallsensor Sensoren gleicher Bauart beziehungsweise gleicher Bauweise mit in einem unverbauten Zustand gleichen Resonanzfrequenzen sind. Diese Ultraschallsensoren können hier derart unterschiedlich an einem Fahrzeugbauteil angeordnet sein, dass die erste Resonanzfrequenz ungleich der zweiten Resonanzfrequenz ist. Der Unterschied in den Resonanzfrequenzen kann sich also daraus ergeben, dass die Ultraschallsensoren unterschiedlich im Kraftfahrzeug verbaut sind. So kann beispielsweise - wie bereits ausgeführt - einer der Sensoren in ein im Stoßfänger ausgebildetes Loch aufgenommen werden, während der andere Sensor an der Rückseite des Stoßfängers angebracht werden kann, und zwar unter Verzicht auf eine Aussparung im Stoßfänger. Die Fahrerassistenzeinrichtung ist dabei nicht auf eine spezielle Verbauart des Ultraschallsensors beschränkt.

In einer Ausführungsform ist vorgesehen, dass die Steuereinrichtung auch den zweiten Ultraschallsensor zwischen einem ersten und einem zweiten Betriebsmodus hin und her schalten kann. Also kann auch der zweite Ultraschallsensor einen ersten Betriebsmodus aufweisen, in welchem dieser zweite Ultraschallsensor seine Ultraschallwellen mit der zweiten (eigenen) Resonanzfrequenz aussendet. Er kann auch einen zweiten Betriebsmodus aufweisen, in welchem der zweite Ultraschallsensor die Ultraschallwellen mit der Resonanzfrequenz des ersten Ultraschallsensors aussendet. Somit sind auch Kreuzmessungen möglich, bei denen der zweite Ultraschallsensor die Funktion des Senders und der erste Ultraschallsensor die Funktion des Empfängers übernehmen.

Ein erfindungsgemäßes Kraftfahrzeug weist eine erfindungsgemäße Fahrerassistenzeinrichtung auf.

Die Erfindung betrifft auch ein Verfahren zum Betreiben einer Fahrerassistenzeinrichtung in einem Kraftfahrzeug, welche einen ersten Ultraschallsensor mit einer Membran sowie einen zweiten Ultraschallsensor mit einer Membran aufweist. Der erste Ultraschallsensor besitzt eine erste Resonanzfrequenz, welche von der Resonanzfrequenz des zweiten Ultraschallsensors verschieden ist. Die Ultraschallsensoren werden mithilfe einer elektronischen Steuereinrichtung angesteuert. Durch die Steuereinrichtung wird zumindest der erste Ultraschallsensor zwischen einem ersten Betriebsmodus, in welchem der erste Ultraschallsensor die Ultraschallwellen mit der ersten Resonanzfrequenz aussendet, und einem zweiten Betriebsmodus geschaltet, in welchem der erste Ultraschallsensor die Ultraschallwellen mit der zweiten Resonanzfrequenz aussendet.

Die mit Bezug auf die erfindungsgemäße Fahrerassistenzeinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachstehend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei veranschaulicht die einzige Figur in schematischer Darstellung ein Kraftfahrzeug mit einer Fahrerassistenzeinrichtung gemäß einer Ausführungsform der Erfindung.

Ein in der Figur dargestelltes Kraftfahrzeug 1 kann beispielsweise ein Personenkraftwagen sein. Das Kraftfahrzeug 1 beinhaltet eine Fahrerassistenzeinrichtung 2, welche im Ausführungsbeispiel als ein Parkhilfesystem ausgebildet ist. Die Fahrerassistenzeinrichtung 2 dient also zum Unterstützen des Fahrers beim Einparken beziehungsweise beim Ausparken des Kraftfahrzeugs 1. Die Fahrerassistenzeinrichtung weist eine Vielzahl von Ultraschallsensoren 3 bis 6 auf, die an einem vorderen Stoßfänger 7 des Kraftfahrzeugs 1 verteilt angeordnet sind. Die Anzahl sowie die Anordnung der Ultraschallsensoren 3 bis 6 sind in der Figur lediglich beispielhaft dargestellt. Diese Anzahl sowie die Anordnung der Ultraschallsensoren 3 bis 6 können je nach Ausführungsform unterschiedlich sein. Es können auch Ultraschallsensoren an einem in der Figur nicht dargestellten hinteren Stoßfänger des Kraftfahrzeugs 1 vorgesehen sein, und das nachstehend beschriebene Verfahren kann auch auf die hinteren Ultraschallsensoren angewandt werden. Die Erfindung ist also nicht auf eine bestimmte Anzahl oder aber eine bestimmte Anordnung von Ultraschallsensoren beschränkt.

Zur Fahrerassistenzeinrichtung 2 gehört auch eine elektronische Steuereinrichtung 8, welche beispielsweise einen Mikrocontroller und/oder einen digitalen Signalprozessor beinhalten kann. Die Steuereinrichtung 8 ist mit den Ultraschallsensoren 3 bis 6 elektrisch gekoppelt und dient zur Ansteuerung der Ultraschallsensoren 3 bis 6. Die Steuereinrichtung 8 empfängt auch Messsignale der Ultraschallsensoren 3 bis 6 und berechnet anhand dieser Messsignale die Abstände zwischen dem Kraftfahrzeug 1 einerseits und den in seiner Umgebung befindlichen Hindernissen andererseits. Diese Abstände können dann mithilfe einer Ausgabeeinrichtung 9 ausgegeben werden, so dass der Fahrer über die gemessenen Abstände informiert wird. Die Ausgabeeinrichtung 9 kann die Abstände beispielsweise mittels eines Displays und/oder mithilfe eines Lautsprechers ausgeben.

Zumindest zwei der Ultraschallsensoren 3 bis 6 - beispielsweise auch alle Ultraschallsensoren 3 bis 6 - besitzen vorliegend jeweils unterschiedliche Resonanzfrequenzen. Beispielsweise besitzt der Ultraschallsensor 3 eine erste Resonanzfrequenz f1, der Ultraschallsensor 4 eine zweite Resonanzfrequenz f2, der Ultraschallsensor 5 eine dritte Resonanzfrequenz f3, und der Ultraschallsensor 6 eine vierte Resonanzfrequenz f4. Die unterschiedlichen Resonanzfrequenzen f1 bis f4 können beispielsweise darauf zurückzuführen sein, dass unterschiedliche Sensortypen beziehungsweise Sensoren unterschiedlicher Bauweise verwendet werden. Es können aber auch gleiche Ultraschallsensoren 3 bis 6 eingesetzt werden, die jedoch unterschiedlich an dem Stoßfänger 7 montiert werden. Die unterschiedlichen Resonanzfrequenzen f1 bis f4 können sich also auch aus den unterschiedlichen Verbauarten der Ultraschallsensoren 3 bis 6 ergeben.

Die Ultraschallsensoren 3 bis 6 weisen auch jeweils eine Membran auf, die sowohl zum Aussenden als auch zum Empfangen von Ultraschallwellen dient. Dies bedeutet, dass jeder Ultraschallsensor 3 bis 6 sowohl als Sender als auch als Empfänger dient. Im Hinblick auf das Empfangen von Ultraschallwellen können die Ultraschallsensoren 3 bis 6 grundsätzlich ausschließlich bei der jeweiligen Resonanzfrequenz f1 bis f4 empfangen. Das Empfangsspektrum kann jedoch auch ein wenig größer sein, die Empfangsbandbreite kann beispielsweise einige, wenige Kilohertz betragen. Dies bedeutet, dass die Ultraschallsensoren 3 bis 6 ausschließlich Ultraschallsignale empfangen können, deren Frequenz gleich der jeweiligen Resonanzfrequenz ist beziehungsweise in einem relativ kleinen Bereich um die Resonanzfrequenz liegt.

Ein Verfahren gemäß einer Ausführungsform der Erfindung wird nachfolgend näher beschrieben:
Jeder Ultraschallsensor 3 bis 6 weist mindestens zwei Betriebsmodi auf, nämlich einen ersten Betriebsmodus, in welchem der jeweilige Ultraschallsensor 3 bis 6 die Ultraschallwellen mit seiner eigenen Resonanzfrequenz f1 bis f4 aussendet, wie auch mindestens einen weiteren Betriebsmodus, in welchem dieser Ultraschallsensor 3 bis 6 die Ultraschallwellen mit der Resonanzfrequenz f1 bis f4 eines anderen Ultraschallsensors 3 bis 6 aussendet. Die Steuereinrichtung 8 kann somit die jeweilige Sendefrequenz der Ultraschallsensoren 3 bis 6 variieren beziehungsweise adaptiv anpassen, nämlich abhängig von dem jeweiligen Betriebsmodus.

Beispielsweise besitzt der Ultraschallsensor 3 neben seinem ersten Betriebsmodus, in welchem der Ultraschallsensor 3 die Ultraschallwellen mit der Resonanzfrequenz f1 aussendet, auch einen zweiten Betriebsmodus, in welchem der Ultraschallsensor 3 seine Ultraschallwellen mit der Resonanzfrequenz f2 des Ultraschallsensors 4 aussendet. In diesem Falle wird eine Kreuzmessung durchgeführt, bei welcher die vom Ultraschallsensor 3 in der Resonanzfrequenz f2 des Ultraschallsensors 4 ausgesendeten und von einem Hindernis reflektierten Ultraschallwellen von dem benachbarten Ultraschallsensor 4 empfangen werden. In diesem Falle empfängt bevorzugt ausschließlich der Ultraschallsensor 4 die Ultraschallwellen. Bevorzugt werden die Ultraschallwellen also von demjenigen Ultraschallsensor 3 bis 6 empfangen, dessen Resonanzfrequenz f1 bis f4 gleich der Frequenz der ausgesendeten Ultraschallwellen ist.

Gegebenenfalls kann der beispielhaft genannte Ultraschallsensor 3 auch einen weiteren dritten Betriebsmodus aufweisen, in welchem dieser Ultraschallsensor 3 die Ultraschallwellen mit einer solchen Sendefrequenz aussenden kann, welche gleich der Resonanzfrequenz f3 des Ultraschallsensors 5 ist. Die Kreuzmessung wird dann mit den Ultraschallsensoren 3 und 5 durchgeführt. Auch ein vierter Betriebsmodus des Ultraschallsensors 3 ist möglich, in welchem die ausgesendeten Ultraschallwellen eine solche Sendefrequenz aufweisen, die gleich der Resonanzfrequenz f4 des Ultraschallsensors 6 ist.

Wird im ersten Betriebsmodus die Ultraschallwelle mit einer Sendefrequenz ausgesendet, die gleich der jeweils eigenen Resonanzfrequenz f1 bis f4 des jeweiligen Ultraschallsensors 3 bis 6 ist, so können diese von einem Hindernis reflektierten Ultraschallwellen dann insbesondere ausschließlich durch denselben Ultraschallsensor 3 bis 6 empfangen werden, durch welchen die Ultraschallwelle ausgesendet wurde. Somit sind parallele Messungen möglich, bei denen alle Ultraschallsensoren 3 bis 6 gleichzeitig oder aber zeitlich überlappend ihre Ultraschallwellen aussenden. Diese Ultraschallwellen besitzen dann jeweils unterschiedliche Frequenzen und können somit ausschließlich durch denjenigen Ultraschallsensor 3 bis 6 empfangen werden, dessen Resonanzfrequenz f1 bis f4 gleich der Frequenz der Ultraschallwellen ist.

## Patentansprüche

1. Fahrerassistenzeinrichtung (2) für ein Kraftfahrzeug (1), mit:
- einem ersten Ultraschallsensor (3 bis 6) mit einer Membran zum Aussenden und Empfangen von Ultraschallwellen, wobei der erste Ultraschallsensor (3 bis 6) eine erste Resonanzfrequenz (f1 bis f4) aufweist,
- einem zweiten Ultraschallsensor (3 bis 6) mit einer Membran zum Aussenden und Empfangen von Ultraschallwellen, wobei der zweite Ultraschallsensor (3 bis 6) eine von der ersten Resonanzfrequenz (f1 bis f4) unterschiedliche zweite Resonanzfrequenz (f1 bis f4) aufweist, und
- einer Steuereinrichtung (8) zum Ansteuern der Ultraschallsensoren (3 bis 6),
**dadurch gekennzeichnet, dass**
die Steuereinrichtung (8) dazu ausgelegt ist, zumindest den ersten Ultraschallsensor (3 bis 6) zwischen einem ersten Betriebsmodus, in welchem der erste Ultraschallsensor (3 bis 6) die Ultraschallwellen mit der ersten Resonanzfrequenz (f1 bis f4) aussendet, und einem zweiten Betriebsmodus zu schalten, in welchem der erste Ultraschallsensor (3 bis 6) die Ultraschallwellen mit der zweiten Resonanzfrequenz (f1 bis f4) aussendet.

2. Fahrerassistenzeinrichtung (2) nach Anspruch 1,
**dadurch gekennzeichnet, dass**
in dem ersten Betriebsmodus der erste Ultraschallsensor (3 bis 6), insbesondere ausschließlich der erste Ultraschallsensor (3 bis 6) der beiden Ultraschallsensoren (3 bis 6), die Ultraschallwellen mit der ersten Resonanzfrequenz (f1 bis f4) empfängt.

3. Fahrerassistenzeinrichtung (2) nach Anspruch 1 oder 2,
**dadurch gekennzeichnet, dass**
in dem zweiten Betriebsmodus der zweite Ultraschallsensor (3 bis 6), insbesondere ausschließlich der zweite Ultraschallsensor (3 bis 6) der beiden Ultraschallsensoren (3 bis 6), die Ultraschallwellen mit der zweiten Resonanzfrequenz (f1 bis f4) empfängt.

4. Fahrerassistenzeinrichtung (2) nach einem der vorhergehenden Ansprüche,
**dadurch gekennzeichnet, dass**
der erste und der zweite Ultraschallsensor (3 bis 6) Sensoren gleicher Bauart mit in einem unverbauten Zustand gleichen Resonanzfrequenzen sind, wobei die Ultraschallsensoren (3 bis 6) derart unterschiedlich an einem Fahrzeugbauteil angeordnet sind, dass die erste Resonanzfrequenz (f1 bis f4) ungleich der zweiten Resonanzfrequenz (f1 bis f4) ist.

5. Fahrerassistenzeinrichtung (2) nach einem der Ansprüche 1 bis 3,
**dadurch gekennzeichnet, dass**
der erste und der zweite Ultraschallsensor (3 bis 6) Sensoren unterschiedlicher Bauart mit in einem unverbauten Zustand unterschiedlichen Resonanzfrequenzen sind.

6. Fahrerassistenzeinrichtung (2) nach einem der vorhergehenden Ansprüche,
**dadurch gekennzeichnet, dass**
die Steuereinrichtung (8) dazu ausgelegt ist, auch den zweiten Ultraschallsensor (3 bis 6) zwischen einem ersten Betriebsmodus, in welchem der zweite Ultraschallsensor (3 bis 6) die Ultraschallwellen mit der zweiten Resonanzfrequenz (f1 bis f4) aussendet, und einem zweiten Betriebsmodus zu schalten, in welchem der zweite Ultraschallsensor (3 bis 6) die Ultraschallwellen mit der ersten Resonanzfrequenz (f1 bis f4) aussendet.

7. Kraftfahrzeug (1) mit einer Fahrerassistenzeinrichtung (2) nach einem der vorhergehenden Ansprüche.

8. Verfahren zum Betreiben einer Fahrerassistenzeinrichtung (2) in einem Kraftfahrzeug (1), welche einen ersten Ultraschallsensor (3 bis 6) mit einer Membran zum Aussenden und Empfangen von Ultraschallwellen sowie einen zweiten Ultraschallsensor (3 bis 6) mit einer Membran zum Aussenden und Empfangen von Ultraschallwellen aufweist, wobei der erste Ultraschallsensor (3 bis 6) eine erste Resonanzfrequenz (f1 bis f4) und der zweite Ultraschallsensor (3 bis 6) eine von der ersten Resonanzfrequenz (f1 bis f4) unterschiedliche zweite Resonanzfrequenz (f1 bis f4) besitzen und die Ultraschallsensoren (3 bis 6) durch eine Steuereinrichtung (8) angesteuert werden,
**dadurch gekennzeichnet, dass**
durch die Steuereinrichtung (8) zumindest der erste Ultraschallsensor (3 bis 6) zwischen einem ersten Betriebsmodus, in welchem der erste Ultraschallsensor (3 bis 6) die Ultraschallwellen mit der ersten Resonanzfrequenz (f1 bis f4) aussendet, und einem zweiten Betriebsmodus geschaltet wird, in welchem der erste Ultraschallsensor (3 bis 6) die Ultraschallwellen mit der zweiten Resonanzfrequenz (f1 bis f4) aussendet.

9. Verfahren nach Anspruch 8,
**dadurch gekennzeichnet, dass**
in dem ersten Betriebsmodus die ausgesendeten Ultraschallwellen mit der ersten Resonanzfrequenz (f1 bis f4) mittels des ersten Ultraschallsensors (3 bis 6), insbesondere ausschließlich mittels des ersten Ultraschallsensors (3 bis 6), empfangen werden.

10. Verfahren nach Anspruch 8 oder 9,
**dadurch gekennzeichnet, dass**
in dem zweiten Betriebsmodus die ausgesendeten Ultraschallwellen mit der zweiten Resonanzfrequenz (f1 bis f4) mittels des zweiten Ultraschallsensors (3 bis 6), insbesondere ausschließlich mittels des zweiten Ultraschallsensors (3 bis 6), empfangen werden.

## Claims

1. Driver assistance device (2) for a motor vehicle (1), having:
- a first ultrasonic sensor (3 to 6) having a diaphragm for transmitting and receiving ultrasound waves, wherein the first ultrasonic sensor (3 to 6) has a first resonant frequency (f1 to f4),
- a second ultrasonic sensor (3 to 6) having a diaphragm for transmitting and receiving ultrasound waves, wherein the second ultrasonic sensor (3 to 6) has a second resonant frequency (f1 to f4), which is different from the first resonant frequency (f1 to f4), and
- a control device (8) for actuating the ultrasonic sensors (3 to 6),
**characterized in that**
the control device (8) is designed to switch at least the first ultrasonic sensor (3 to 6) between a first mode of operation, in which the first ultrasonic sensor (3 to 6) transmits the ultrasound waves at the first resonant frequency (f1 to f4), and a second mode of operation, in which the first ultrasonic sensor (3 to 6) transmits the ultrasound waves at the second resonant frequency (f1 to f4).

2. Driver assistance device (2) according to Claim 1, **characterized in that**
in the first mode of operation the first ultrasonic sensor (3 to 6), in particular exclusively the first ultrasonic sensor (3 to 6) from the two ultrasonic sensors (3 to 6), receives the ultrasound waves at the first resonant frequency (f1 to f4).

3. Driver assistance device (2) according to Claim 1 or 2,
**characterized in that**
in the second mode of operation the second ultrasonic sensor (3 to 6), in particular exclusively the second ultrasonic sensor (3 to 6) from the two ultrasonic sensors (3 to 6), receives the ultrasound waves at the second resonant frequency (f1 to f4).

4. Driver assistance device (2) according to one of the preceding claims,
**characterized in that**
the first and second ultrasonic sensors (3 to 6) are sensors of the same design having resonant frequencies that are the same in an uninstalled state, wherein the ultrasonic sensors (3 to 6) are arranged on a vehicle part in such a different manner that the first resonant frequency (f1 to f4) is not equal to the second resonant frequency (f1 to f4).

5. Driver assistance device (2) according to one of Claims 1 to 3,
**characterized in that**
the first and second ultrasonic sensors (3 to 6) are sensors of different design having resonant frequencies that are different in an uninstalled state.

6. Driver assistance device (2) according to one of the preceding claims,
**characterized in that**
the control device (8) is designed to also switch the second ultrasonic sensor (3 to 6) between a first mode of operation, in which the second ultrasonic sensor (3 to 6) transmits the ultrasound waves at the second resonant frequency (f1 to f4), and a second mode of operation, in which the second ultrasonic sensor (3 to 6) transmits the ultrasound waves at the first resonant frequency (f1 to f4).

7. Motor vehicle (1) having a driver assistance device (2) according to one of the preceding claims.

8. Method for operating a driver assistance device (2) in a motor vehicle (1), which driver assistance device has a first ultrasonic sensor (3 to 6) having a diaphragm for transmitting and receiving ultrasound waves and a second ultrasonic sensor (3 to 6) having a diaphragm for transmitting and receiving ultrasound waves, wherein the first ultrasonic sensor (3 to 6) has a first resonant frequency (f1 to f4) and the second ultrasonic sensor (3 to 6) has a second resonant frequency (f1 to f4), which is different from the first resonant frequency (f1 to f4), and the ultrasonic sensors (3 to 6) are actuated by a control device (8),
**characterized in that**
the control device (8) switches at least the first ultrasonic sensor (3 to 6) between a first mode of operation, in which the first ultrasonic sensor (3 to 6) transmits the ultrasound waves at the first resonant frequency (f1 to f4), and a second mode of operation, in which the first ultrasonic sensor (3 to 6) transmits the ultrasound waves at the second resonant frequency (f1 to f4).

9. Method according to Claim 8,
**characterized in that**
in the first mode of operation the transmitted ultrasound waves are received at the first resonant frequency (f1 to f4) by means of the first ultrasonic sensor (3 to 6), in particular exclusively by means of the first ultrasonic sensor (3 to 6).

10. Method according to Claim 8 or 9,
**characterized in that**
in the second mode of operation the transmitted ultrasound waves are received at the second resonant frequency (f1 to f4) by means of the second ultrasonic sensor (3 to 6), in particular exclusively by means of the second ultrasonic sensor (3 to 6).

## Revendications

1. Dispositif d'aide à la conduite (2) pour un véhicule automobile (1), comprenant :
- un premier capteur à ultrasons (3 à 6) comprenant une membrane pour émettre et recevoir des ondes ultrasonores, le premier capteur à ultrasons (3 à 6) présentant une première fréquence de résonance (f1 à f4),
- un deuxième capteur à ultrasons (3 à 6) comprenant une membrane pour émettre et recevoir des ondes ultrasonores, le deuxième capteur à ultrasons (3 à 6) présentant une deuxième fréquence de résonance (f1 à f4) différente de la première fréquence de résonance (f1 à f4), et
- un dispositif de commande (8) pour commander les capteurs à ultrasons (3 à 6),
**caractérisé en ce que** le dispositif de commande (8) est conçu pour commuter au moins le premier capteur à ultrasons (3 à 6) entre un premier mode de fonctionnement dans lequel le premier capteur à ultrasons (3 à 6) émet les ondes ultrasonores avec la première fréquence de résonance (f1 à f4) et un deuxième mode de fonctionnement dans lequel le premier capteur à ultrasons (3 à 6) émet les ondes ultrasonores avec la deuxième fréquence de résonance (f1 à f4).

2. Dispositif d'aide à la conduite (2) selon la revendication 1,
**caractérisé en ce que**
dans le premier mode de fonctionnement, le premier capteur à ultrasons (3 à 6), en particulier exclusivement le premier capteur à ultrasons (3 à 6) des deux capteurs à ultrasons (3 à 6) reçoit les ondes ultrasonores avec la première fréquence de résonance (f1 à f4).

3. Dispositif d'aide à la conduite (2) selon la revendication 1 ou 2,
**caractérisé en ce que**
dans le deuxième mode de fonctionnement, le deuxième capteur à ultrasons (3 à 6), en particulier exclusivement le deuxième capteur à ultrasons (3 à 6) des deux capteurs à ultrasons (3 à 6) reçoit les ondes ultrasonores avec la deuxième fréquence de résonance (f1 à f4).

4. Dispositif d'aide à la conduite (2) selon l'une quelconque des revendications précédentes,
**caractérisé en ce que**
le premier et le deuxième capteur à ultrasons (3 à 6) sont des capteurs de même type avec des fréquences de résonance identiques dans un état non assemblé, les capteurs à ultrasons (3 à 6) étant disposés différemment au niveau d'un composant du véhicule de telle sorte que la première fréquence de résonance (f1 à f4) ne soit pas égale à la deuxième fréquence de résonance (f1 à f4).

5. Dispositif d'aide à la conduite (2) selon l'une quelconque des revendications 1 à 3,
**caractérisé en ce que**
le premier et le deuxième capteur à ultrasons (3 à 6) sont des capteurs de construction différente avec des fréquences de résonance différentes dans un état non assemblé.

6. Dispositif d'aide à la conduite (2) selon l'une quelconque des revendications précédentes,
**caractérisé en ce que**
le dispositif de commande (8) est conçu pour également commuter le deuxième capteur à ultrasons (3 à 6) entre un premier mode de fonctionnement dans lequel le deuxième capteur à ultrasons (3 à 6) émet les ondes ultrasonores avec la deuxième fréquence de résonance (f1 à f4) et un deuxième mode de fonctionnement dans lequel le deuxième capteur à ultrasons (3 à 6) émet les ondes ultrasonores avec la première fréquence de résonance (f1 à f4).

7. Véhicule automobile (1) comprenant un dispositif d'aide à la conduite (2) selon l'une quelconque des revendications précédentes.

8. Procédé pour faire fonctionner un dispositif d'aide à la conduite (2) dans un véhicule automobile (1), lequel présente un premier capteur à ultrasons (3 à 6) avec une membrane pour émettre et recevoir des ondes ultrasonores ainsi qu'un deuxième capteur à ultrasons (3 à 6) avec une membrane pour émettre et recevoir des ondes ultrasonores, le premier capteur à ultrasons (3 à 6) possédant une première fréquence de résonance (f1 à f4) et le deuxième capteur à ultrasons (3 à 6) possédant une deuxième fréquence de résonance (f1 à f4) différente de la première fréquence de résonance (f1 à f4) et les capteurs à ultrasons (3 à 6) étant commandés par un dispositif de commande (8),
**caractérisé en ce**
**qu'**au moins le premier capteur à ultrasons (3 à 6) est commuté par le dispositif de commande (8) entre un premier mode de fonctionnement dans lequel le premier capteur à ultrasons (3 à 6) émet les ondes ultrasonores avec la première fréquence de résonance (f1 à f4) et un deuxième mode de fonctionnement dans lequel le premier capteur à ultrasons (3 à 6) émet les ondes ultrasonores avec la deuxième fréquence de résonance (f1 à f4).

9. Procédé selon la revendication 8,
**caractérisé en ce que**
dans le premier mode de fonctionnement, les ondes ultrasonores émises avec la première fréquence de résonance (f1 à f4) sont reçues au moyen du premier capteur à ultrasons (3 à 6), en particulier exclusivement au moyen du premier capteur à ultrasons (3 à 6).

10. Procédé selon la revendication 8 ou 9,
**caractérisé en ce que**
dans le deuxième mode de fonctionnement, les ondes ultrasonores émises avec la deuxième fréquence de résonance (f1 à f4) sont reçues au moyen du deuxième capteur à ultrasons (3 à 6), en particulier exclusivement au moyen du deuxième capteur à ultrasons (3 à 6).
